# EUROPEAN PATENT APPLICATION

(11) **EP 4 404 349 A1**
(43) Date of publication of application: **24.07.2024**
(21) Application number: 22869211.7
(22) Date of filing: 13.09.2022
(51) Int. Cl.: H01M 50/249, H01M 50/202

(54) **BATTERY CASE WITH INTEGRATED ANTI-COLLISION BEAM STRUCTURE, BATTERY PACK, AND VEHICLE**

(30) Priority: 15.09.2021 CN 202122239107 U
(71) Applicant: Beijing CHJ Information Technology Co., Ltd., Beijing 101399 (CN)
(72) Inventor: JIANG, Leilei, Beijing 101399 (CN)
(74) Representative: Maiwald GmbH
(86) International application number: PCT/CN2022/118523
(87) International publication number: WO 2023/040842

(57) **Abstract**

The present disclosure relates to the technical field of power batteries, and in particular to a battery case with an integrated anti-collision beam structure, a battery pack, and a vehicle. The battery case with the integrated anti-collision beam structure comprises a battery case and an anti-collision beam arranged at the bottom of the battery case, wherein the anti-collision beam comprises a crushing portion, and the crushing portion is configured to crush and destroy foreign matters at the bottom thereof. By providing the anti-collision beam at the bottom of the battery case, the integration of the anti-collision beam structure and the battery case is realized, such that the structural design of the anti-collision beam is no longer limited to a front suspension structure; and the anti-collision beam comprises the crushing portion which can realize the crushing and destroying of the foreign matters at the bottom thereof, such that damage to the battery pack caused by a direct collision between the foreign matters at the bottom thereof and the battery case can be effectively prevented, thereby achieving an effect of effectively protecting the battery pack.

## Description

### CROSS-REFERENCE TO RELATED APPLICATION

This application is based on and claims priority to Chinese patent application No. 202122239107.X filed on September 15, 2021, the entire content of which is incorporated herein by reference.

### FIELD

The present disclosure relates to the field of power batteries and more particularly to a battery case with an integrated anti-collision beam structure, a battery pack, and a vehicle.

### BACKGROUND

A battery pack as one of core components of an electric vehicle is an energy source of the whole vehicle and has great influence on power performance, safety performance and endurance of the whole vehicle. Currently, the battery pack of the electric vehicle is usually placed externally on a chassis of the vehicle, making it easy to be bumped and hit by gravels during driving of the vehicle. In order to effectively protect the battery pack, a battery anti-collision beam is usually mounted at the chassis of the vehicle. The position of the battery anti-collision beam is lower, so that when collision occurs at the bottom, foreign matters first contact the anti-collision beam, preventing the foreign matters from directly impacting the battery pack and hence protecting the battery pack.

However, the battery anti-collision beam at present is mostly integrated with a front suspension of the vehicle. Limited by structural characteristics of the front suspension, the battery anti-collision beam has a simple structure with weak strength and cannot provide good protection for the battery pack. Meanwhile, some types of vehicles are limited by the front suspension structure and cannot be equipped with any battery anti-collision beam, so it is impossible to protect the battery pack well.

### SUMMARY

In order to solve or at least partially solve the above technical problems, the present disclosure provides a battery case with an integrated anti-collision beam structure, a battery pack and a vehicle.

The present disclosure provides a battery case with an integrated anti-collision beam structure, including a battery case and an anti-collision beam at a bottom of the battery case. The anti-collision beam includes a crushing portion configured to crush and destroy foreign matters at the bottom.

Optionally, there is one or more crushing portions, and when there are a plurality of crushing portions, the plurality of crushing portions are sequentially arranged at the bottom of the battery case along a width direction of the battery case.

Optionally, the crushing portion is made of an aluminum profile and welded to a bottom guard plate of the battery case.

Optionally, the crushing portion is arranged at a front end of the bottom of the battery case along a crushing direction, and the crushing portion includes at least two vertical ribs spaced apart from each other along a width direction of the battery case.

Optionally, an arc-shaped guide surface is formed at a joint between a front end of the crushing portion along a crushing direction and a bottom of the crushing portion.

Optionally, the anti-collision beam further includes a guide portion configured to guide the foreign matters crushed by the crushing portion to an outside of the battery case.

Optionally, the crushing portion is arranged at a middle position of the bottom of the battery case along a width direction, and the guide portion is arranged at each of both sides of the crushing portion along the width direction of the battery case (1).

Optionally, the guide portion is made of an aluminum profile and welded to a bottom guard plate of the battery case.

Optionally, the guide portion spans across the bottom of the battery case.

Optionally, the guide portion includes two guide ribs arranged oppositely, and the two guide ribs extend from the crushing portion towards two sides of the battery case respectively and the two guide ribs both extend from the crushing portion towards a rear end direction of the crushing portion.

Optionally, the two guide ribs extend in a V-shape from the crushing portion to both sides of the battery case.

Optionally, an included angle between the two guide ribs is set to be greater than 90 degrees and less than 180 degrees.

Optionally, a side surface, facing the crushing direction of the crushing portion, of each of the two guide ribs is formed as an arc-shaped transition surface.

The present disclosure also provides a battery pack, including the battery case with the integrated anti-collision beam structure as described in any of the above embodiments.

The present disclosure also provides a vehicle including the battery pack as described in the above embodiment.

Compared with the related art, the technical solutions provided by the embodiments of the present disclosure have the following advantages.

For the battery case with the integrated anti-collision beam structure, the battery pack and the vehicle according to the embodiments of the present disclosure, the integration of the anti-collision beam and the battery case is realized by arranging the anti-collision beam at the bottom of the battery case, and the structural design of the anti-collision beam is no longer limited by the front suspension structure but depends on practical requirements. Specifically, the anti-collision beam includes the crushing portion that can crush and destroy foreign matters at the bottom, so that the battery pack can be effectively prevented from being damaged due to direct collision between foreign matters at the bottom and the battery case, and an effective protection effect on the battery pack can be achieved. In addition, by adopting the battery case with the integrated anti-collision beam structure according to the present disclosure, the structural strength of the battery pack can be effectively enhanced, and the anti-collision beam structure integrated on the battery case can be correspondingly designed according to structures of different battery packs, thereby improving the structural versatility.

### BRIEF DESCRIPTION OF DRAWINGS

The accompanying drawings, which are incorporated in and constitute a part of this specification, illustrate embodiments consistent with the present disclosure and together with the description, serve to explain the principles of the present disclosure.

In order to explain technical solutions in embodiments of the present disclosure or the related art more clearly, drawings necessary for description of the embodiments or the related art will be briefly introduced below. For those skilled in the art, other drawings can be obtained according to these drawings without creative effort.
Fig. 1 is a side view of a battery pack according to embodiments of the present disclosure;
Fig. 2 is a front view of a battery pack according to embodiments of the present disclosure;
Fig. 3 is a partially schematic view of the battery pack shown in Fig. 2;
Fig. 4 is a partially schematic view of the battery pack shown in Fig. 1;
Fig. 5 is a bottom view of a battery pack according to embodiments of the present disclosure;
Fig. 6 is a partially sectional view taken along direction A-A in Fig. 5.

Reference numerals:
battery case 1; anti-collision beam 2; crushing portion 21; vertical rib 211; arc-shaped guide surface 212; guide portion 22; guide rib 221; arc-shaped transition surface 222.

### DETAILED DESCRIPTION

In order to understand the above objectives, features and advantages of the present disclosure more clearly, technical solutions of the present disclosure will be further described below. It should be noted that embodiments of the present disclosure and features in the embodiments can be combined with each other without conflict.

Many specific details are set forth in the following description for thorough understanding of the present disclosure, but the present disclosure may be practiced in other ways than those described herein. Embodiments described in the specification are only part of rather than all of the embodiments of the present disclosure.

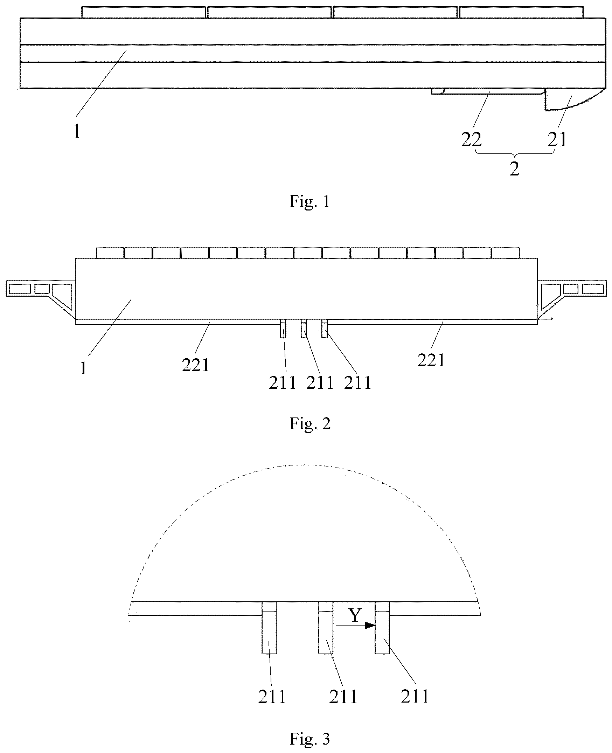

As shown in Figs. 1-6, embodiments of the present disclosure provide a battery case with an integrated anti-collision beam structure, including a battery case 1 and an anti-collision beam 2 arranged at a bottom of the battery case 1. Specifically, the anti-collision beam 2 includes a crushing portion 21 configured to crush and destroy foreign matters at the bottom.

For the battery case with the integrated anti-collision beam structure according to embodiments of the present disclosure, the integration of the anti-collision beam 2 and the battery case 1 is realized by arranging the anti-collision beam 2 at the bottom of the battery case 1, and the structural design of the anti-collision beam 2 is no longer limited by a front suspension structure but depends on practical requirements. Specifically, the anti-collision beam 2 includes the crushing portion 21 that can crush and destroy foreign matters at the bottom, so that a battery pack can be effectively prevented from being damaged due to direct collision between foreign matters at the bottom and the battery case 1, and an effective protection effect on the battery pack can be achieved. In addition, by adopting the battery case with the integrated anti-collision beam structure according to the present disclosure, the structural strength of the battery pack can be effectively enhanced, and the anti-collision beam structure integrated on the battery case 1 can be correspondingly designed according to structures of different battery packs, thereby improving the structural versatility.

Specifically, there may be one or more crushing portions 21 in the light of requirements. When there are a plurality of crushing portions 21, the plurality of crushing portions 21 are sequentially arranged on a bottom guard plate of the battery case 1 along a width direction of the battery case 1.

As shown in Figs. 1-4, the crushing portion 21 is arranged at a front end of the bottom of the battery case 1 along a crushing direction, to ensure that when foreign matters at the bottom collide with the battery case, the crushing portion 21 first contacts with the foreign matters at the bottom. The crushing portion 21 includes at least two vertical ribs 211 spaced apart from each other along a width direction of the battery case 1, to ensure that the crushing portion 21 has a certain structural strength and a certain width, so that the crushing portion 21 can crush and destroy the foreign matters at the bottom within a certain width range. In specific implementation, the crushing portion 21 is made of aluminum profiles and welded with the bottom guard plate of the battery case 1 by welding (CMT). The material of the crushing portion 21 and the manner of fixation with the battery case 1 are not limited to the above description and can be set reasonably according to actual situations. It should be noted that the width direction of the battery case is a width direction of a vehicle when the battery case of the present disclosure is mounted at a chassis of the vehicle.

In a specific embodiment, as shown in Figs. 2 and 3, the crushing portion 21 includes three vertical ribs 211 spaced apart from each other along the width direction of the battery case 1, to ensure that the crushing portion 21 has a certain structural strength and a certain width, so that the crushing portion 21 can crush and destroy foreign matters at the bottom within a certain width range. The number of vertical ribs 211 is not limited to three, and there may be two, four or more vertical according to requirements.

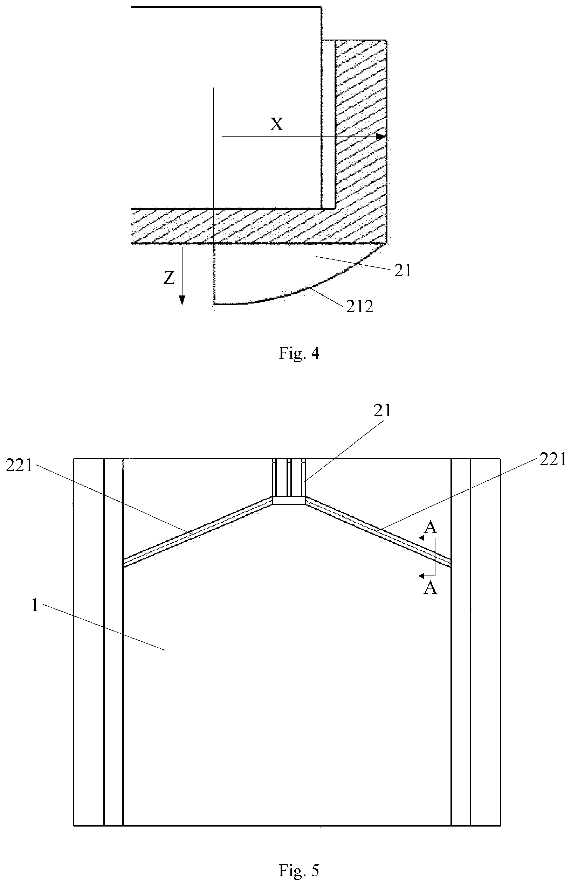

Further, as shown in Figs. 1 and 4, an arc-shaped guide surface 212 is formed at a j oint between a front end of the crushing portion 21 along the crushing direction and a bottom of the crushing portion 21. That is, the joint between the front end of the crushing portion 21 along the crushing direction and the bottom of the crushing portion 21 is configured a raised structure, so that large foreign matters at the bottom can contact the crushing portion 21 through smooth transition by means of the arc-shaped guide surface 212 and avoid head-on collision with the crushing portion 21. It should be noted that the crushing direction of the crushing portion refers to a front of the vehicle when the battery case of the present disclosure is mounted at the chassis of the vehicle and is perpendicular to the width direction of the battery case.

In specific implementations, a height dimension of the crushing portion 21 (a dimension in Z direction as shown in Fig. 4) and a length dimension (a dimension in X direction as shown in Fig. 4) of the crushing portion 21 can be designed according to ground clearances of different vehicles, and a dimension of a gap between adjacent vertical ribs 211 of the crushing portion 21 (a dimension in Y direction as shown in Fig. 3) can be designed according to strength requirements of the crushing portion 21.

It should be noted that a lowest point of the crushing portion 21 is designed as a lowest point of the battery pack to allow foreign matters at the bottom first contact the crushing portion 21 in the event of collision, and meanwhile, a height of the lowest point of the bottom of the crushing portion 21 is lower than a height of a lowest point of a bottom of a guide portion 22, to ensure that the foreign matters at the bottom first contact the crushing portion 21 and then contact the guide portion 22 after being crushed by the crushing portion 21. It should be understood that the height of the lowest point of the bottom of the crushing portion 21 (i.e., a lowest position in the Z direction as shown in Fig. 4) refers to a minimum distance from the bottom of the crushing portion 21 to the ground when the battery case with the integrated anti-collision beam structure is mounted on the vehicle; the height of the lowest point of the bottom of the guide portion 22 refers to a minimum distance from the bottom of the guide portion 22 to the ground when the battery case with the integrated anti-collision beam structure is mounted on the vehicle.

In some embodiments of the present disclosure, as shown in Figs. 1, 2 and 5, the anti-collision beam 2 further includes the guide portion 22, and the guide portion 22 is configured to guide foreign matters at the bottom, which have been crushed by the crushing portion 21, to the outside of the battery case 1.

Specifically, the anti-collision beam 2 includes the crushing portion 21 and the guide portion 22; the crushing portion 21 can crush and destroy the foreign matters at the bottom; and the guide portion 22 can timely discharge the foreign matters at the bottom to the outside of the battery case 1. As a result, the battery pack can be effectively prevented from being damaged due to direct collision between the foreign matters at the bottom and the battery case 1, thereby achieving an effective protection effect on the battery pack. Specifically, when foreign matters at the bottom collide with the battery case, the crushing portion 21 of the anti-collision beam 2 can first contact the foreign matters at the bottom, and can crush, destroy and break up the foreign matters due to a certain structural strength of the crushing portion 21. Then, the crushed foreign matters at the bottom are led out of the bottom of the battery case in time by the guide portion 22, to prevent the foreign matters at the bottom from further colliding with the bottom of the battery case, thereby providing effective protection for the battery pack.

In some embodiments of the present disclosure, as shown in Figs. 2 and 5, the crushing portion 21 is arranged at a middle position of the bottom of the battery case 1 along the width direction, and the guide portions 22 are arranged at both sides of the crushing portion 21 along the width direction of the battery case 1. The crushing portion 21 can crush and destroy the foreign matters at the bottom, and the guide portions 22 can discharge the foreign matters at the bottom to the outside of the battery case 1 in time, effectively avoiding damage to the battery pack caused by the direct collision between the foreign matters at the bottom and the battery case 1.

It should be noted that according to market data, damage or failure of the battery pack caused by the collision between the battery pack and foreign matters at the bottom mostly occurs in the middle of the battery pack. Consequently, in the present disclosure, the crushing portion 21 is arranged in the middle of the battery case 1 along the width direction, and the guide portions 22 are arranged on both sides of the crushing portion 21 along the width direction of the battery case 1. In specific implementations, the positions of the crushing portion 21 and the guide portions 22 can be adjusted according to actual situations, which fall into the protection scope of the present disclosure as long as they do not deviate from the design concept of the present disclosure.

In some embodiments of the present disclosure, as shown in Figs. 1, 2, 5 and 6, the guide portion 22 includes two guide ribs 221 arranged oppositely. The two guide ribs 221 extend from the crushing portion 21 towards two sides of the battery case 1 correspondingly, and both guide ribs 221 extend from the crushing portion 21 towards a rear end direction of the crushing portion 21. In this way, when foreign matters at the bottom collide with the battery case 1 during running of the vehicle, the foreign matters at the bottom first contact the crushing portion 21 and are crushed and destroyed by the crushing portion 21, and then are guided along the guide portion 22 from both sides of the battery case 1 to the outside of the battery case 1.

In specific implementations, the guide portion 22 is made of aluminum profiles and welded with the bottom guard plate of the battery case 1 by welding (such as cold metal transition welding (CMT)). The guide portion 22 spans across the bottom of the battery case 1. When the foreign matters at the bottom contact the guide portion 22, the foreign matters will move to both sides of the battery case 1 along the guide portion 22 and be finally guided to the outside of the battery case 1, avoiding damage to the battery pack.

In a specific embodiment, as shown in Fig. 5, two guide ribs 221 extend in a V-shape from the crushing portion 21 to both sides of the battery case 1. Specifically, an included angle formed by the two guide ribs 221 at the crushing portion 21 is set reasonably according to a specific size of the battery case. For example, the included angle between the two guide ribs 221 is set to be greater than 90 degrees and less than 180 degrees. A ratio of a width of the crushing portion 21 to a width of the guide rib 221 along the width direction of the battery case is set reasonably according to the specific size of the battery case, and a ratio between a length of the crushing portion 21 and a length of the guide rib 221 along a length direction of the battery case is also set reasonably according to the specific size of the battery case, which will not be specifically limited here and fall into the protection scope of the present disclosure as long as they do not deviate from the design concept of the present disclosure.

The two guide ribs 221 are not limited to extending in the V-shape. The two guide ribs 221 can also adopt other structural forms such as arc-shaped guide ribs with a certain radian.

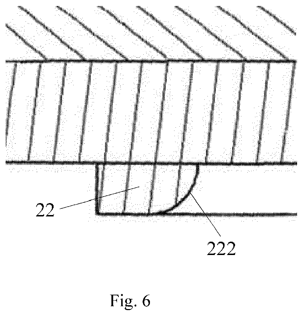

Further, as shown in Fig. 6, a side surface, facing the crushing direction of the crushing portion 21, of each of the two guide ribs 221 is formed as an arc-shaped transition surface 222. With the arrangement of the arc-shaped transition surface 222, head-on collision between the foreign matters at the bottom and the guide ribs 221 at the bottom of the battery case can be avoided.

As shown in Fig. 1, Fig. 2 and Fig. 5, embodiments of the present disclosure also provide a battery pack, including the battery case with the integrated anti-collision beam structure according to any of the above embodiments.

Since the battery pack according to the embodiments of the present disclosure includes the battery case with the integrated anti-collision beam structure according to any of the above embodiments, the battery pack has beneficial effects of the battery case with the integrated anti-collision beam structure according to any of the above embodiments, which will not be repeated here.

Embodiments of the present disclosure also provide a vehicle including the battery pack according to the above embodiments.

Since the vehicle according to the embodiments of the present disclosure includes the battery pack of the above embodiments, the vehicle has beneficial effects of the battery pack according to the above embodiment, which will not be repeated here.

It should be noted that terms such as "first" and "second" in the present disclosure are only used to distinguish one entity or operation from another entity or operation, and do not necessarily require or imply any actual relationship or order between these entities or operations. Moreover, terms such as "comprising", "including" or any other variation thereof mean non-exclusive inclusion, so that a process, method, article or device including a series of elements includes not only those elements, but also other elements not explicitly listed or elements inherent to such process, method, article or device. Without further limitations, an element defined by the phrase "including a/an" does not exclude the existence of other identical elements in the process, method, article or device including said element.

The above description only involves some embodiments of the present disclosure, to enable those skilled in the art to understand or implement the present disclosure. Various modifications to these embodiments will be apparent to those skilled in the art, and the general principles defined herein can be implemented in other embodiments without departing from the spirit or scope of the present disclosure. Therefore, the present disclosure is not limited to the embodiments described above, but has the broadest scope consistent with the principles and features disclosed herein.

## Claims

1. A battery case with an integrated anti-collision beam structure, comprising a battery case (1) and an anti-collision beam (2) at a bottom of the battery case (1), wherein the anti-collision beam (2) comprises a crushing portion (21) configured to crush and destroy foreign matters at the bottom.

2. The battery case with the integrated anti-collision beam structure according to claim 1, wherein there is one or more crushing portions (21), and when there are a plurality of crushing portions (21), the plurality of crushing portions (21) are sequentially arranged at the bottom of the battery case (1) along a width direction of the battery case (1).

3. The battery case with the integrated anti-collision beam structure according to claim 1 or 2, wherein the crushing portion (21) is made of an aluminum profile and welded to a bottom guard plate of the battery case (1).

4. The battery case with the integrated anti-collision beam structure according to any one of claims 1-3, wherein the crushing portion (21) is arranged at a front end of the bottom of the battery case (1) along a crushing direction, and the crushing portion (21) comprises at least two vertical ribs (211) spaced apart from each other along a width direction of the battery case (1).

5. The battery case with the integrated anti-collision beam structure according to any one of claims 1-4, wherein an arc-shaped guide surface (212) is formed at a joint between a front end of the crushing portion (21) along a crushing direction and a bottom of the crushing portion (21).

6. The battery case with the integrated anti-collision beam structure according to any one of claims 1-5, wherein the anti-collision beam (2) further comprises a guide portion (22) configured to guide the foreign matters crushed by the crushing portion (21) to an outside of the battery case (1).

7. The battery case with the integrated anti-collision beam structure according to claim 6, wherein the crushing portion (21) is arranged at a middle position of the bottom of the battery case (1) along a width direction, and the guide portion (22) is arranged at each of both sides of the crushing portion (21) along the width direction of the battery case (1).

8. The battery case with the integrated anti-collision beam structure according to claim 6 or 7, wherein the guide portion (22) is made of an aluminum profile and welded to a bottom guard plate of the battery case (1).

9. The battery case with the integrated anti-collision beam structure according to any one of claims 6-8, wherein the guide portion (22) spans across the bottom of the battery case (1).

10. The battery case with the integrated anti-collision beam structure according to any one of claims 6-9, wherein the guide portion (22) comprises two guide ribs (221) arranged oppositely, and the two guide ribs (221) extend from the crushing portion (21) towards two sides of the battery case (1) respectively and the two guide ribs (221) both extend from the crushing portion (21) towards a rear end direction of the crushing portion (21).

11. The battery case with the integrated anti-collision beam structure according to claim 10, wherein the two guide ribs (221) extend in a V-shape from the crushing portion (21) to both sides of the battery case (1).

12. The battery case with the integrated anti-collision beam structure according to claim 11, wherein an included angle between the two guide ribs (221) is set to be greater than 90 degrees and less than 180 degrees.

13. The battery case with the integrated anti-collision beam structure according to any one of claims 10-12, wherein a side surface, facing the crushing direction of the crushing portion (21), of each of the two guide ribs (221) is formed as an arc-shaped transition surface (222).

14. A battery pack, comprising the battery case with the integrated anti-collision beam structure according to any one of claims 1-13.

15. A vehicle, comprising the battery pack according to claim 14.
